# EUROPEAN PATENT APPLICATION

(11) **EP 4 672 425 A1**
(43) Date of publication of application: **31.12.2025**
(21) Application number: 25154687.5
(22) Date of filing: 29.01.2025
(51) Int. Cl.: H01M 10/613, H01M 10/625, H01M 10/6567, H01M 50/204

(54) **BATTERY PACK HOUSING, BATTERY PACK, AND VEHICLE**

(30) Priority: 24.06.2024 CN 202421457293 U; 03.09.2024 WO PCT/CN2024/116427
(71) Applicant: Eve Energy Storage Co., Ltd, Wuhan, Hubei 430074 (CN)
(72) Inventor: CHENG, Si, Wuhan, Hubei 430074 (CN); LIU, Jianbo, Wuhan, Hubei 430074 (CN); ZHUO, Wei, Wuhan, Hubei 430074 (CN); YI, Haohao, Wuhan, Hubei 430074 (CN); ZHU, Yuan, Wuhan, Hubei 430074 (CN)
(74) Representative: Berggren Oy

(57) **Abstract**

This disclosure provides a battery pack housing (100), a battery pack, and a vehicle. The battery pack housing (100) includes a box (110) provided with a box installation cavity (130) and a liquid outlet structure (120). A liquid outlet (111) is provided at a sidewall of the box (110). The liquid outlet structure (120) is provided with a connection opening (121) and a liquid outlet cavity (122) in fluid communication with the connection opening (121). The box installation cavity (130) is in fluid communication with the liquid outlet (111). A first horizontal plane where the connection opening (121) is located is higher than upper surfaces of the plurality of battery cells (200) and a bottom of the liquid outlet cavity (122), and a second horizontal plane where a bottom end of the liquid outlet (111) is located is lower than the first horizontal plane.

## Description

### TECHNICAL FIELD

The present application relates to the field of batteries, for example, to a battery pack housing, a battery pack, and a vehicle.

### BACKGROUND

In a submerged battery pack, a coolant outlet needs to be positioned at a certain distance above an upper surface of a battery module so that the battery module can be completely submerged in coolant.

### TECHNICAL PROBLEMS

Therefore, a position design of a liquid outlet in a battery pack housing is limited by a height of the battery module, which is inconvenient for a design of the battery pack housing.

### TECHNICAL SOLUTIONS

In order to achieve the above purpose, this disclosure adopts the following technical solutions.

In a first aspect, the present disclosure provides a battery pack housing, including: a box, wherein the box is provided with a box installation cavity, the box installation cavity is configured to accommodate coolant to immerse a plurality of battery cells, a liquid outlet is provided at a sidewall of the box, and the liquid outlet is configured to install a liquid outlet pipe to discharge the coolant; and a liquid outlet structure installed on the sidewall of the box and located in the box installation cavity, wherein the liquid outlet structure is provided with a connection opening and a liquid outlet cavity in fluid communication with the connection opening. The box installation cavity is in fluid communication with to the liquid outlet through the connection opening and the liquid outlet cavity. A first horizontal plane where the connection opening is located is higher than upper surfaces of the plurality of battery cells and a bottom of the liquid outlet cavity, a second horizontal plane where a bottom end of the liquid outlet is located is lower than the first horizontal plane, so that the coolant immersing the plurality of battery cells flows from the box installation cavity through the connection opening, the liquid outlet cavity, and the liquid outlet pipe in sequence.

In a second aspect, the present disclosure further provides a battery pack. The battery pack including the above battery pack housing.

In a third aspect, the present disclosure further provides a vehicle. The vehicle includes the above battery pack.

### BENEFICIAL EFFECTS

The battery pack housing provided by the present disclosure may still realize that the coolant completely immerses the plurality of battery cells before being discharged from the liquid outlet, under the circumstances that the horizontal plane where the bottom end of the liquid outlet is located is lower than the upper surfaces of the plurality of battery cells. Compared with related technologies, the battery pack provided herein may not only provide a more uniform heat dissipation effect and reduce a temperature gradient among the battery cells, but also occupy less space under the same energy storage demand, and reduce materials and manufacturing costs under the same energy requirement and hence reduce a production cost of the battery pack.

The vehicle provided by this disclosure includes the battery pack provided by this disclosure, and thus has all the technical effects of the provided battery pack.

### BRIEF DESCRIPTION OF THE DRAWINGS

FIG. 1 is a schematic structural diagram of a battery pack housing according to some embodiments of the present disclosure.
FIG. 2 is a schematic structural diagram showing a liquid outlet structure in FIG. 1, wherein the liquid outlet structure is installed on a sidewall of a box.
FIG. 3 is an enlarged schematic diagram of part A in FIG. 2.
FIG. 4 is a cross-sectional view of FIG. 3.
FIG. 5 is a schematic top view of FIG. 2.
FIG. 6 is an enlarged schematic diagram of part B in FIG. 4.
FIG. 7 is a schematic front view of FIG. 2.
FIG. 8 is an enlarged schematic diagram of part C in FIG. 6.

### List of reference signs:

100-battery pack housing; 1 10-box; 111-liquid outlet; 120-liquid outlet structure; 121-connection opening; 122-liquid outlet cavity; 123-side plate; 124-end plate; 125- bottom plate; 130-box installation cavity; 140-liquid outlet pipe; 200-battery cell; 300-cover plate; and 400-box installation opening.

### DETAILED DESCRIPTION

A submerged battery pack refers to a battery pack design in which an entire battery module or battery cell is placed in a liquid coolant to improve a heat dissipation effect. Compared with traditional air cooling or liquid cooling heat dissipation systems, the submerged battery pack may achieve more uniform heat dissipation, and moreover, may have better thermal management performance under an extreme operating condition. The submerged battery pack usually consists of a battery module, a coolant circulation system, a coolant, and a battery pack housing. Several battery cells in the battery module are placed in a sealed container(s) filled with the coolant to ensure that the battery cells are completely submerged. The coolant circulation system usually consists of a pump, a radiator, a pipe, and a control unit, which are used to circulate the coolant to achieve heat dissipation. In related technologies, in order to achieve the "submersion" effect, in designing the battery pack housing, a height of a bottom of a liquid outlet is ensured to be a certain distance higher than an upper surface of the battery module, so that the battery module can be completely submerged in the coolant before the coolant is discharged from the liquid outlet. Thus, a position design of the liquid outlet in the battery pack housing is restrained by the height of the battery module.

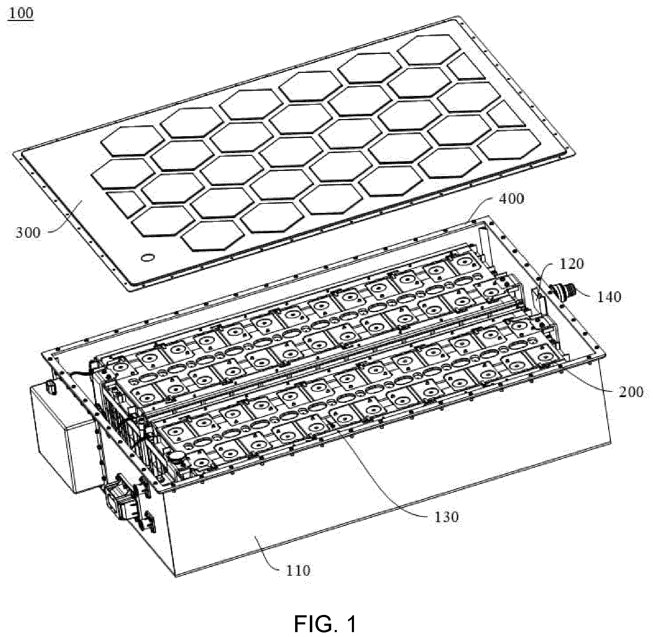

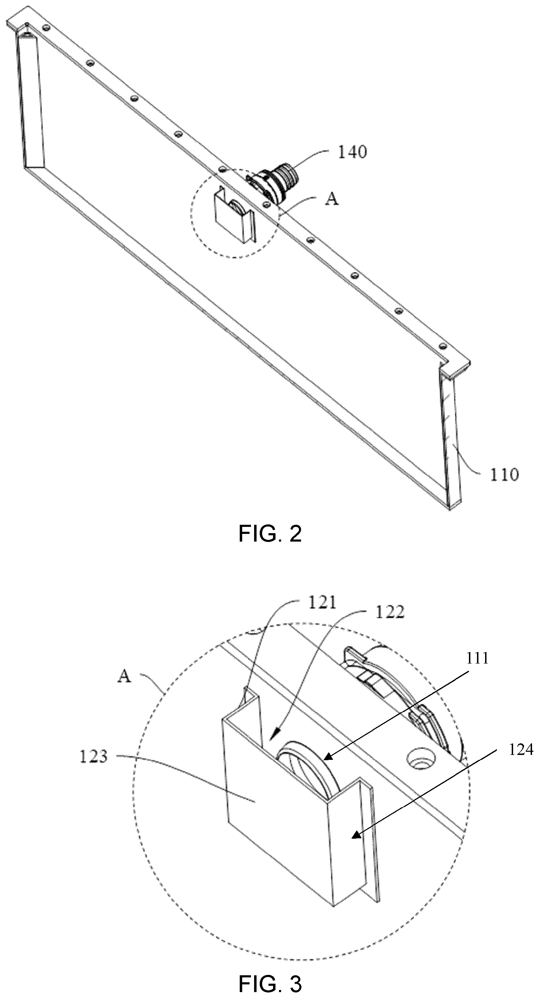

In order to mitigating the design restrictions of battery pack housing, some embodiments of the present disclosure provide a battery pack housing 100. Please refer to FIGS. 1-3, FIG. 1 is a schematic structural diagram of a battery pack housing according to some embodiments of the present disclosure, FIG. 2 is a schematic structural diagram showing a liquid outlet structure in FIG. 1, wherein the liquid outlet structure is installed on a sidewall of a box, and FIG. 3 is an enlarged schematic diagram of part A in FIG. 2. The battery pack housing 100 includes a box 110 and a liquid outlet structure 120. The box 110 is provided with a box installation cavity 130. The box installation cavity 130 is used to accommodate coolant to immerse a plurality of battery cells 200. A liquid outlet 111 is provided at a sidewall of the box 110, and the liquid outlet 111 is used to install a liquid outlet pipe 140 to discharge the coolant. The liquid outlet structure 120 is installed on (an inner surface of) the sidewall of the box 110 and is located in the box installation cavity 130, and is provided with a connection opening 121 and a liquid outlet cavity 122.

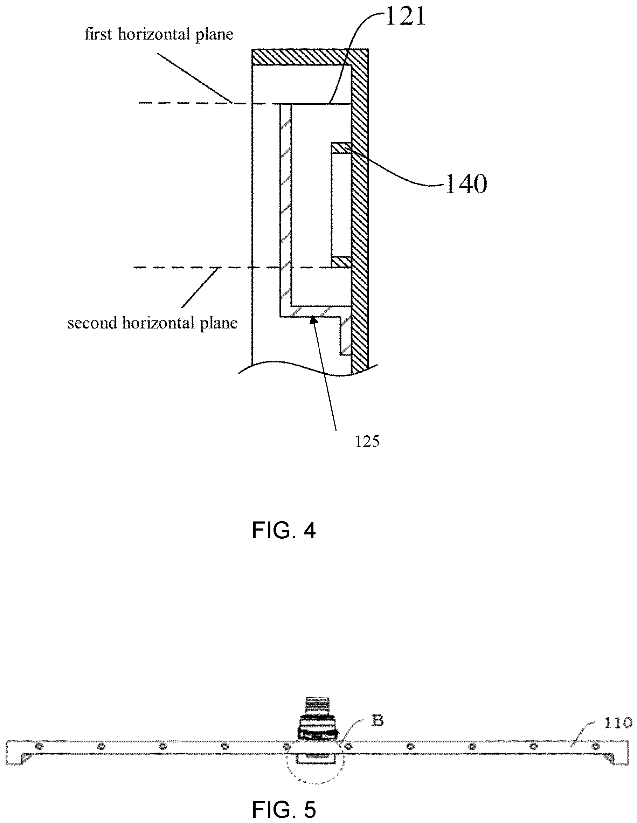

Please refer to FIG. 4. FIG. 4 is a cross-sectional view of FIG. 3. The box installation cavity 130 is in fluid communication with the liquid outlet 111 (and therefore with the liquid outlet pipe 140) through the connection opening 121 and the liquid outlet cavity 122. A first horizontal plane where the connection opening 121 is located is higher than upper surfaces of the plurality of battery cells 200 and a bottom of the liquid outlet cavity 122. A second horizontal plane where a bottom end of the liquid outlet 111 is located is lower than the first horizontal plane, so that the coolant immersing the plurality of battery cells 200 flows from the box installation cavity 130 through the connection opening 121, the liquid outlet cavity 122, and the liquid outlet pipe 140 in sequence. As an example, the bottom end of the liquid outlet 111 may be a lowest part of the side curved surface of a cylindrical liquid outlet pipe 140 in a vertical direction, or a lowest side surface of a cuboid liquid outlet pipe 140. After the plurality of battery cells 200 have been submerged in the coolant in the box installation cavity 130, a liquid level of the coolant will gradually rise to a height of the first horizontal plane where the connection opening 121 is located, before the coolant flows into the liquid outlet cavity 122 of the liquid outlet structure 120 through the connection opening 121 and finally flows out from a pipe opening of the liquid outlet pipe 140, wherein the pipe opening is located in the liquid outlet cavity 122. In this case, the pipe opening of the liquid outlet pipe 140 covers/overlaps the liquid outlet 111 on the sidewall of the box 110, and therefore the second horizontal plane is determined as a horizontal plane where the bottom end of the liquid outlet pipe 140, specifically the bottom end of the pipe opening, is located.

According to the above embodiments, even in cases where the second horizontal plane where the bottom end of the liquid outlet 111 is located is lower than the upper surfaces of the battery cells 200, the coolant should immerse the upper surfaces of the battery cells 200, due to the liquid outlet structure 120, before flowing through the connection opening 121 of the outlet structure 120 and into the outlet pipe 140 installed in the liquid outlet 111. In addition, the outlet structure 120 occupies a small volume within the box installation cavity 130, thereby achieving a high space utilization rate of the battery pack, which can facilitate the installation of other components and reduce a production material cost of the battery pack housing 100.

In some embodiments, please refer to FIG. 1, the second horizontal plane where the bottom end of the liquid outlet 111 is located is lower than the upper surfaces of the plurality of battery cells 200.

Specifically, in the related art, in order to ensure that the plurality of battery cells 200 are submerged in the coolant, a level of the second horizontal plane where the bottom end of the liquid outlet pipe 140 is located is designed to be higher than a level of a top of each battery cell 200. According to the above embodiments, an opening (i.e., the pipe opening) of the liquid outlet pipe 140 facing the box installation cavity 130 is located in the liquid outlet cavity 122, and the level of the first horizontal plane where the connection opening 121 of the liquid outlet structure 120 is located is higher than the level of the top of each battery cell 200. In this way, in a process of filling coolant into the box installation cavity 130, a liquid level of the coolant will gradually increase until exceeding the level of the first horizontal plane where the connection opening 121 of the liquid outlet structure 120 is located, and then the coolant will flow through the connection opening 121 into the liquid outlet cavity 122 and is finally discharged from the liquid outlet pipe 140. While maintaining a cooling effect, the above embodiments further reduce a requirement on the height at which the liquid outlet pipe 140 is located, which facilitates the design of the battery pack housing 100.

In some embodiments, please refer to FIG. 3 and FIG. 4, the connection opening 121 is provided at a top of the liquid outlet structure 120 and is interconnected with a top of the liquid outlet cavity 122. The liquid outlet structure 120 includes a side plate 123 facing the liquid outlet 111 and surrounding at least a part of the liquid outlet cavity 122, two end plates 124, and a bottom plate 125. An orthographic projection of the liquid outlet 111 on the side plate 123 is located within a periphery of the side plate 123. The bottom plate 125 is the bottom of the liquid outlet cavity 122. The two end plates 124 are two sides of the liquid outlet cavity 122 oppositely arranged to each other. The two end plates 124, the bottom plate 125, and the side plate 123 are connected to each other. Theses plates may be formed integrally, for example from one single metal sheet, or may be connected through for example welding, to form the liquid out let structure 120.

According to the above embodiments, the connection opening 121 is defined at least partly by an upper edge of the side plate 123 facing the liquid outlet 111 and is arranged at the top of the outlet structure 120, and the orthographic projection of the liquid outlet 111 on the side plate 123 is arranged to be within the periphery of the side plate 123, that is, the pipe opening of the liquid outlet pipe 140 facing the box installation cavity 130 is located within the liquid outlet cavity 122 of the liquid outlet structure 120. Thus, when the coolant immerses the upper surfaces of the plurality of battery cells 200, the liquid level of the coolant may gradually rise above the top of the outlet structure 120, then flow through the connection opening 121 into the liquid outlet cavity 122, and finally flow out the box 110 via the outlet pipe 140.

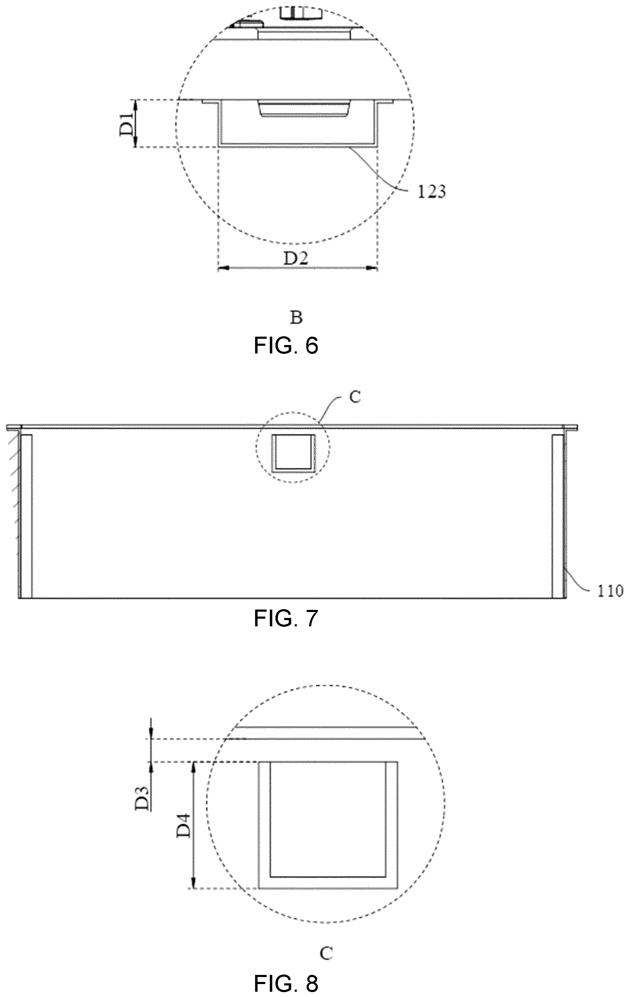

In some embodiments, please refer to FIG. 5 and FIG. 6, FIG. 5 is a schematic top view of FIG. 2, and FIG. 6 is an enlarged schematic diagram of part B in FIG. 4. A distance from a surface of the side plate 123 adjacent to the liquid outlet 111 to the sidewall of the box 110 (specifically the inner surface of the sidewall on which the liquid outlet structure 120 is installed) is D1, a length of the side plate 123 is D2, and an (internal) cross-sectional area of the liquid outlet pipe 140 is S1, where 2×S1>D1×D2>S1.

It is easy to understand that D1×D2 is an area of the connection opening 121 of the liquid outlet structure 120. In the above embodiments, the area of the connection opening 121 is set to be larger than the cross-sectional area S1 of of the liquid outlet pipe 140, so that when the liquid level of the coolant in the box installation cavity 130 gradually rises to the level of the first horizontal plane where the connection opening 121 is located, the relative large area of the connection opening 121 enables a liquid inflow rate, at which the coolant flows through the connection opening 121 into the liquid outlet cavity 122, to be relatively fast. Thus, after the liquid level of the coolant in the box installation cavity 130 reaches the first horizontal plane where the connection opening 121 is located, a coolant mass flow rate through the liquid outlet structure 120 from the inside of the box installation cavity 130 to the outside of the box installation cavity 130 is fast, so as to improve the cooling effect of the coolant.

If the area of the connection opening 121 is smaller than the cross-sectional area S1 of the liquid outlet pipe 140, the coolant flows through the connection opening 121 into the liquid outlet cavity 122 at a slow rate, which in turn causes the coolant to flow out of the liquid outlet cavity 122 into the liquid outlet pipe 140 at a slow liquid outlet rate, which ultimately results in an inadequate cooling effect of the coolant.

According to the above embodiments, the area of the connection opening 121 is set to be less than twice the cross-sectional area S1 of the liquid outlet pipe 140, while still larger than the cross-sectional area S1 of the liquid outlet pipe 140. This configuration allows the coolant to flow rapidly through the connection opening 121 into the liquid outlet cavity 122, resulting in an effective cooling effect, and additionally, ensures that the liquid outlet structure 120 occupies small volume, improving a utilization rate of the space within the box installation cavity 130.

In some embodiments, an inner diameter of the pipe opening of the liquid outlet pipe 140 is r1, and the distance from the side of the side plate 123 adjacent to the liquid outlet 111 to the sidewall of the box 110 is D1, where 2×r1>D1>r1.

According to the above embodiments, by configuring the distance D1 from the side of the side plate 123 adjacent to the liquid outlet 111 to the sidewall of the box 110 to be greater than the inner diameter r1 of the pipe opening of the liquid outlet pipe 140, the side plate 123 is prevented from being too close to the pipe opening of the liquid outlet pipe 140, since the proximity between the side plate 123 and the pipe opening of the liquid outlet pipe 140 may causes a slow rate at which the coolant flows from the liquid outlet cavity 122 into the liquid outlet pipe 140 which affects the cooling effect of the coolant.

In some embodiments, an outer diameter of (the pipe opening of) the liquid outlet pipe 140 is R1, and the length of the side plate 123 is D2, where R1+20 millimeters (mm)>D2>R1+10mm. Herein, it is easy to understand that in order to ensure that the liquid outlet cavity 122 can accommodate one end (i.e., the pipe opening) of the liquid outlet pipe 140, the distance D1 from the side of the side plate 123 adjacent to the liquid outlet 111 to the sidewall of the box 110 may be greater than a perpendicular distance V1 between the plane where the pipe opening of the liquid outlet pipe 140 is located and the sidewall of the box 110, and the length D2 of the side plate 123 may be greater than the outer diameter R1 of the liquid outlet pipe 140. In an actual production process of the battery pack housing 100, the liquid outlet structure 120 may be fixed to the sidewall of the box 110 and around the liquid outlet pipe 140. In cases where a fixation manner of the liquid outlet structure 120 is welding, welding protrusions often occurs to welding joints between the liquid outlet structure 120 and the sidewall of the box 110, thus, some extra spacing may be reserved for the welding protrusions. In cases where the fixation manner is bolting, there are may be a certain gaps for bolts.

Therefore, in the above embodiments, the length D2 of the side plate 123 is set to be 10 mm greater than the outer diameter R1 of the liquid outlet pipe 140, that is, D2>R1+10 mm, which allows for the presence of the welding protrusions or bolts. In addition, in order to prevent the length D2 of the side plate 123 from being too large and affecting the utilization of the space within the box installation cavity 130, the length D2 of the side plate 123 is set to be smaller than R1+20 mm. In this way, the length of the side plate 123 not only meets the requirements for accommodation of the welding protrusions or bolts in fixing the liquid outlet structure 120, but also enables the liquid outlet structure 120 to occupy a small volume to ensure a high utilization rate of the space within the box installation cavity 130.

In some embodiments, please refer to FIG. 7 and FIG. 8, FIG. 7 is a schematic front view of FIG. 2, and FIG. 8 is an enlarged schematic diagram of part C in FIG. 6. The battery pack housing 100 further includes a cover plate 300. A top of the box 110 is provided with a box installation opening 400 in fluid communication with the box installation cavity 130. The cover plate 300 covers the box installation opening 400. The cover plate 300 is connected to the box installation opening 400. A (perpendicular) distance between the cover plate 300 and the connection opening 121 is D3, and a level difference between the level of the first horizontal plane where the connection opening 121 is located and the level of the upper surfaces of the plurality of battery cells 200 is H1, where D3>5mm and H1>10mm.

According the above embodiments, configuring the distance D3 between the cover plate 300 and the connection opening 121 to be greater than 5 mm may make the liquid level of the coolant in the box installation cavity 130 remain lower than the installation opening 400 of the box 110, which prevents overfilling and overflow of the coolant in the box installation cavity 130, thereby improving safety. In addition, the level difference H1 between the first horizontal plane where the connection opening 121 is located and the upper surfaces of the plurality of battery cells 200 is configured to be greater than 10 mm, which may ensure that the liquid level of the coolant remain higher than the that of the upper surfaces of the plurality of battery cells 200 after the amount of the coolant in the box installation cavity 130 gradually increases to a stable level, thereby avoiding the position design of the liquid outlet 111 being constrained by the height of the battery module, and making the design of the battery pack housing 100 more convenient.

In some embodiments, a width of the side plate 123 is D4, and the outer diameter of the liquid outlet pipe 140 is R1, where R1+20mm>D4>R1+10mm. According to the embodiments, the width D4 of the side plate 123 not only meets the requirements for accommodating the welding protrusions or bolts during the fixing process of the liquid outlet structure 120, but also enables the liquid outlet structure 120 to occupy a small volume. That is, the width D4 of the side plate 123 may realize same beneficial effects as the beneficial effects of the length D2 of the side plate 123 as described above, and details may be referred to the above.

In some embodiments, a center of an orthographic projection of the liquid outlet 111 on the side plate 123 is located on a center line of the side plate 123 in a width direction of the side plate 123.

According to the embodiments, the center of the orthographic projection of the liquid outlet 111 on the side plate 123 is located on the center line of the side plate 123 in the width direction of the side plate 123, which makes distances from the liquid outlet pipe 140 in the liquid outlet 111 to the two end plates 124 of the liquid outlet structure 120, respectively at two ends of the side plate 123 in a length direction of the side plate 123, are equal. As a result, the two end plates 124 maintain symmetry with respect to the liquid outlet 111, thereby creating sufficient space on a side of the liquid outlet cavity 122 where the liquid outlet 111 is located, so as to facilitate fixing the liquid outlet structure 120 on the sidewall of the box 110. Such design aims to allocate sufficient space for welding protrusions or bolts, etc., to facilitate the fixation and installation of the liquid outlet structure 120.

In some cases, a thickness of (the side plate 123 and the two end plates 124 of) the liquid outlet structure 120 is generally between 0.5 mm and 1.5 mm. Setting the thickness of the liquid outlet structure 120 to be greater than 0.5 mm aims to ensure that a strength of the liquid outlet structure 120 meet some required standards. In addition, setting the thickness of the liquid outlet structure 120 to be less than 1.5 mm may reduce the space occupied by the liquid outlet structure 120, thereby maximizing the space utilization of the box installation cavity 130. Such a design solution strikes a suitable balance between the strength requirements and space utilization of the liquid outlet structure 120. Controlling the thickness of the liquid outlet structure 120 to be between 0.5 mm and 1.5 mm not only ensure sufficient strength of the liquid outlet structure 120, but also allows for significant space savings, making an overall design more compact and efficient.

In some embodiments, when the liquid outlet structure 120 is fixed to the sidewall of the box 110 by welding, the welding positions include the edges of the two end plates 124 and the bottom plate 125 of the liquid outlet structure 120 to be welded to the sidewall. Continuous welding is performed on the edges of the two end plates 124 and of the bottom plate 125 to ensure sealing at the connection between the two end plates 124 and the bottom plate 125 of the liquid outlet structure 120 and the sidewall of the box 110. In addition, a structural material of the liquid outlet structure 120 is the same as a structural material of the box 110. Since combination of same materials through welding is likely to result in a uniform welding joint, thereby improving welding strength and stability of the welding joints, thereby providing higher welding strength. Furthermore, the same structural material of the liquid outlet structure 120 and the box 110 make the liquid outlet structure 120 and the box 110 have consistent physical characteristics such as melting points, making the welding process easier to control, so as to ensure the welding quality. This consistency helps ensure stability and controllability in the welding process, while improving the quality and reliability of the welded joints.

This disclosure provides a battery pack housing 100. The battery pack housing 100 includes a box 110 and a liquid outlet structure 120. The box 110 is provided with a box installation cavity 130. A liquid outlet 111 is provided at a sidewall of the box 110, and the liquid outlet 111 is used to install a liquid outlet pipe 140 to discharge the coolant. The liquid outlet structure 120 is installed on the sidewall of the box 110 and is located in the box installation cavity 130, and is provided with a connection opening 121 and a liquid outlet cavity 122. The box installation cavity 130 is in fluid communication with the liquid outlet 111 through the connection opening 121 and the liquid outlet cavity 122 in sequence. The first horizontal plane where the connection opening 121 is located is higher than the upper surfaces of the plurality of battery cells 200 and higher than the second horizontal plane where the bottom end of the liquid outlet 111 is located. After the coolant has immersed the plurality of battery cells 200, the coolant flows through the connection opening 121, the liquid outlet cavity 122, and the liquid outlet pipe 140 in sequence. Therefore, under the circumstances that the second horizontal plane where the bottom end of the liquid outlet 111 is located is lower than the upper surfaces of the plurality of battery cells 200, the battery pack housing 100 provided by the present disclosure may still realize that the coolant completely immerses the plurality of battery cells 200 before being discharged through the liquid outlet 111.

Some embodiments of the present disclosure further provide a battery pack including the battery pack housing 100. Compared with related technologies, the submerged battery pack provided herein may not only provide a more uniform heat dissipation effect and reduce a temperature gradient among the battery cells, but also occupy less space under the same energy storage demand, and reduce materials and manufacturing costs under the same energy requirement and hence reduce a production cost of the battery pack.

Some embodiments of the present disclosure further provide a vehicle. The vehicle includes a battery pack, and the battery pack includes the battery pack housing 100. This vehicle has all the technical effects of the battery pack provided by the embodiments of the present disclosure, which will not be repeated here.

## Claims

1. A battery pack housing (100), **characterized by** comprising:
a box (110), wherein the box (110) is provided with a box installation cavity (130), the box installation cavity (130) is configured to accommodate coolant to immerse a plurality of battery cells (200), a liquid outlet (111) is provided at a sidewall of the box (110), and the liquid outlet (111) is configured to install a liquid outlet pipe (140) to discharge the coolant; and
a liquid outlet structure (120) installed on the sidewall of the box (110) and located in the box installation cavity (130), wherein the liquid outlet structure (120) is provided with a connection opening (121) and a liquid outlet cavity (122) in fluid communication with the connection opening (121),
the box installation cavity (130) is in fluid communication with the liquid outlet (111) through the connection opening (121) and the liquid outlet cavity (122),
a first horizontal plane where the connection opening (121) is located is higher than upper surfaces of the plurality of battery cells (200) and a bottom of the liquid outlet cavity (122), a second horizontal plane where a bottom end of the liquid outlet (111) is located is lower than the first horizontal plane, and the coolant immersing the plurality of battery cells (200) flows from the box installation cavity (130) through the connection opening (121), the liquid outlet cavity (122), and the liquid outlet pipe (140) in sequence.

2. The battery pack housing (100) of claim 1, wherein the second horizontal plane is lower than the upper surfaces of the battery cells (200).

3. The battery pack housing (100) according to claim 1, wherein the connection opening (121) is provided on a top of the liquid outlet structure (120) and is in fluid communication with a top of the liquid outlet cavity (122), the liquid outlet structure (120) comprises a side plate (123), the side plate (123) faces the liquid outlet (111) and defines at least a part of the liquid outlet cavity (122), and an orthographic projection of the liquid outlet (111) on the side plate (123) is located within a periphery of the side plate (123).

4. The battery pack housing (100) of claim 3, wherein a distance from a surface of the side plate (123) adjacent to the liquid outlet (111) to the sidewall of the box (110) is D1, a length of the side plate (123) is D2, and an internal cross-sectional area of the liquid outlet pipe (140) is S1, where 2×S1>D1×D2>S1.

5. The battery pack housing (100) of claim 4, wherein an inner diameter of the liquid outlet pipe (140) is r1, wherein 2×r1>D1>r1.

6. The battery pack housing (100) of claim 4, wherein an outer diameter of the liquid outlet pipe (140) is R1, wherein R1+20mm>D2>R1+10mm.

7. The battery pack housing (100) of claim 3, further comprising a cover plate (300), a top of the box (110) is provided with a box installation opening (400) in fluid communication with the box installation cavity (130), the cover plate (300) covers the box installation opening (400), and
a distance between the cover plate (300) and the connection opening (121) is D3, and a level difference between a level of the first horizontal plane and a level of the upper surfaces of the battery cells (200) is H1, where D3>5mm and H1>10mm.

8. The battery pack housing (100) of claim 3, wherein a width of the side plate (123) is D4, wherein R1+20mm>D4>R1+10mm.

9. The battery pack housing (100) of claim 3, wherein a center of the orthographic projection of the liquid outlet (111) on the side plate (123) is located on a center line of the side plate (123) in a width direction of the side plate (123).

10. A battery pack, **characterized by** comprising the battery pack housing (100) according to any one of claims 1-9.

11. A vehicle, **characterized by** comprising the battery pack according to claim 10.
